Europäisches Patentamt

(19) European Patent Office

Office européen des brevets

(11) Numéro de publication : **0 330 551 B1**

(12) **FASCICULE DE BREVET EUROPEEN**

(45) Date de publication du fascicule du brevet :
**15.01.92 Bulletin 92/03**

(21) Numéro de dépôt : **89400445.6**

(22) Date de dépôt : **17.02.89**

(51) Int. Cl.⁵ : **B25J 15/00**

54 **Pince de préhension automatique d'objet.**

(30) Priorité : **23.02.88 FR 8802131**

(43) Date de publication de la demande :
**30.08.89 Bulletin 89/35**

(45) Mention de la délivrance du brevet :
**15.01.92 Bulletin 92/03**

(84) Etats contractants désignés :
**DE GB IT NL**

(56) Documents cités :
**US-A- 4 484 855**

(73) Titulaire : **VIDEOCOLOR**
**7, boulevard Romain-Rolland**
**F-92128 Montrouge (FR)**

(72) Inventeur : **Thinlot, Michel**
**THOMSON - CSF SCPI - 19, avenue de**
**Messine**
**F-75008 Paris (FR)**

(74) Mandataire : **Einsel, Robert, Dipl.-Ing.**
**Deutsche Thomson-Brandt GmbH Patent- und**
**Lizenzabteilung Göttinger Chaussee 76**
**W-3000 Hannover 91 (DE)**

Jouve, 18, rue Saint-Denis, 75001 PARIS

# Description

La présente invention a pour objet un procédé de préhension automatique d'objet permettant de conserver au moins un élément de référence géométrique qui lui est lié, et une pince de préhension pour sa mise en oeuvre.

Dans les machines connues de bobinage de demi-ferrites de déviateurs pour tubes cathodiques, il est essentiel de déterminer avec précision l'axe de révolution de ces demi-ferrites et d'en conserver la référence lors de l'étape de bobinage, afin de positionner avec la meilleure précision possible le bobinage par rapport à la demi-ferrite. Il est également important de ne pas briser les demi-ferrites lors de leur préhension par une pince de manipulation automatique qui les transfère d'un dispositif centreur vers la machine de bobinage.

On connaît par exemple d'après le FR-A-2559947 un dispositif de centrage de demi-ferrites permettant d'en déterminer avec précision l'axe de révolution malgré les variations dimensionnelles relativement élevées que peuvent présenter les ferrites dans une fabrication en grande série.

D'autre part, on connaît par des pinces de préhension de demi-ferrites telles que celles utilisées dans les machines de bobinage de marque "TAGA", qui fonctionnent correctement, mais présentent des inconvénients qui en rendent l'utilisation peu pratique, et même onéreuse. En effet, ces pinces connues comportent des ressorts tarés agissant sur les bras et pouvant vieillir différemment. Il faut bloquer fortement ces bras pour leur éviter tout glissement provoqué par un système d'actionnement pneumatique risquant d'appliquer des poussées non équilibrées opposées à ce bras et perdre ainsi la position de l'axe de référence. D'autre part, les surfaces de préhension des bras s'usent assez rapidement au contact par frottement des ferrites. Et enfin, on ne peut enlever la pince de son support sans la démonter en grande partie et sans la désolidariser du système pneumatique, ce qui complique la maintenance.

La présente invention a pour objet un procédé automatique de préhension d'objet, permettant de conserver un élément de référence géométrique qui lui est lié, procédé qui soit facile à mettre en oeuvre, et conservant automatiquement ledit élément de référence tout en appliquant des forces de préhension sensiblement équilibrées.

La présente invention a également pour objet une pince automatique de préhension d'objet permettant de conserver un élément de référence géométrique lié à cet objet, pince qui soit de réalisation et d'entretien simple, facile à utiliser, ne se déréglant pas au fur et à mesure de l'usure éventuelle des surfaces de préhension.

Le procédé conforme à l'invention, permettant de saisir un objet immobilisé sur un support approprié en position de référence consiste à saisir l'objet à l'aide d'au moins deux ensembles de préhension mobiles dans un boîtier immobilisé par rapport au support de l'objet, en approchant l'un des ensembles d'une première face de l'objet à l'aide d'un organe de transmission de force motrice entraîné par un moyen moteur, l'organe de transmission étant flottant par rapport au support de l'objet, à approcher d'au moins une autre face de l'objet, à l'aide dudit organe de transmission, au moins un autre ensemble de préhension, à arrêter l'entraînement de l'organe de transmission dès que les ensembles de préhension serrent suffisamment l'objet, à bloquer au moins l'un des ensembles par rapport au boîtier, à libérer l'objet de son support, et à déplacer le boîtier avec l'objet. Selon une autre caractéristique de l'invention, l'organe de transmission est sollicité vers l'objet par un ressort disposé dans ledit boîtier. Alternativement, l'un des ensembles de préhension est sollicité vers l'objet par un ressort disposé dans ledit boîtier. Selon encore une autre caractéristique de l'invention, les ensembles de préhension sont appliqués simultanément sur l'objet. Alternativement, les ensembles de préhension sont appliqués les uns après les autres sur l'objet.

La pince de préhension, conforme à l'invention, pour la préhension automatique d'objet, permettant de conserver au moins un élément de référence géométrique qui lui est lié comporte, dans un boîtier, au moins deux ensembles de bras de préhension, comprenant chacun au moins un bras mobile de préhension, un organe de transmission de force motrice relié à ces ensembles de bras, et au moins un ressort disposé entre un point fixe du boîtier et un point mobile de la pince qui est sur l'un des ensembles de bras ou l'organe de transmission. L'organe de transmission présente au moins un degré de liberté par rapport au boîtier.

Selon un mode de réalisation préféré de l'invention, la pince comporte deux ensembles à deux bras rectilignes chacun, mobiles longitudinalement, les deux bras de chacun des deux ensembles étant reliés par des bielettes articulées à un écrou, les deux écrous étant entraînés en translation par une tige filetée. De façon avantageuse, la tige filetée comporte deux parties, l'une avec un pas à gauche et l'autre avec un pas à droite, chacune de ces deux parties coopérant avec l'un des deux écrous, le ressort étant appliqué contre une rondelle solidaire de la tige filetée.

La présente invention sera mieux comprise à la lecture de la description détaillée d'un mode de réalisation pris comme exemple non limitatif et illustré par le dessin annexé, sur lequel :

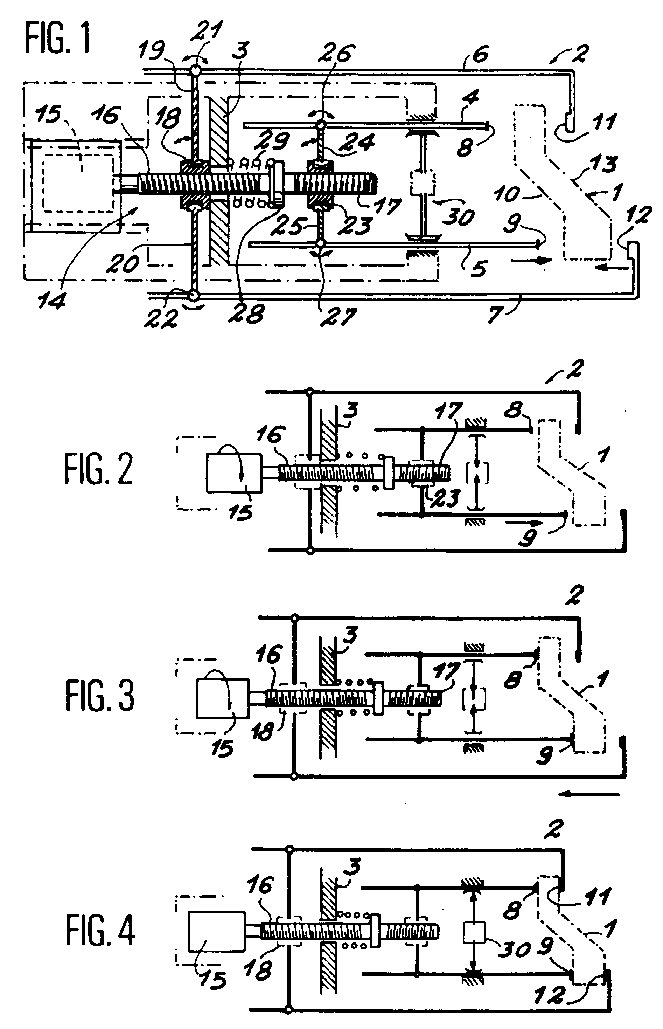

— les figures 1 à 4 sont des vues schématisées d'une pince de préhension conforme à l'invention, représentée dans diverses positions.

Le mode de réalisation préféré décrit ci-dessous se rapporte à une pince de saisie de demi-ferrites coopérant avec un dispositif centreur permettant de positionner les demi-ferrites de telle façon que leur axe de révolution coïncide le mieux possible avec un axe fixe de ce dispositif centreur. Cette pince permet de présenter les demi-ferrites à une machine de bobinage appropriée toujours de la même façon, c'est-à-dire que leur axe de révolution, leur plan de casse et les encoches pratiquées aux extrémités de chaque plan de casse, occupent, en position de bobinage dans la machine, toujours les mêmes emplacements, ce qui permet de réaliser toujours de la même façon les enroulements sur les ferrites.

Cependant, il est bien entendu que l'invention n'est pas limitée à une telle application, et qu'elle peut être mise en oeuvre pour saisir une pièce de forme quelconque fixée ou posée en une position de référence, ou tout au moins en une position pour laquelle on peut déterminer au moins un élément de référence géométrique lié à cette pièce, et pour déplacer (par translation, rotation, ou mouvement complexe) cette pièce vers une seconde position pour laquelle on puisse retrouver cet élément de référence. L'élément de référence peut aussi bien être un axe ou un plan de symétrie, qu'un axe de rotation, une face de cette pièce, etc...

La demi-ferrite 1, représentée en coupe sur les figures 1 à 4, est supposée être fixée en position centrée sur un dispositif centreur (non représenté) tel que celui décrit par exemple dans FR-A-2559947.

La pince 2 comporte, dans un boîtier approprié, dont on n'a représenté qu'une partie de cloison 3, un premier ensemble de deux bras 4, 5 et un deuxième ensemble de deux bras 6, 7. Ces quatre bras sont disposés parallèlement entre eux et guidés de façon à ne pouvoir se déplacer que longitudinalement. Les bras 4, 5 comportent à leurs extrémités libres des surfaces de préhension 8, 9 destinées à être appliquées sur les bords de la surface extérieure 10 de la ferrite 1, et les bras 6, 7 comportent à leurs extrémités libres des surfaces de préhension 11, 12 destinées à être appliquées sur les bords de la surface intérieure 13 de la ferrite 1.

La pince 2 comporte ensuite un organe de transmission de force motrice, qui est dans le cas présent une tige filetée 14 se déplaçant librement dans une ouverture de la paroi 3, et entraînée en rotation par un moteur 15 flottant par rapport au support de la pince et qui peut en être avantageusement désaccouplable de la tige 14. Une première moitié 16 de la tige filetée 14 est à pas à gauche, et l'autre moitié 17 est à pas à droite. Sur la première moitié 16, on dispose un écrou 18 sur lequel sont articulées deux bielettes 19, 20, respectivement reliées par des articulations 21, 22 aux bras 6, 7. Sur la deuxième moitié 17, on dispose un écrou 23 sur lequel sont articulées deux bielettes 24, 25 respectivement reliées par des articulations 26, 27 aux bras 4, 5.

On fixe sur la tige 14, à peu près en son milieu, une rondelle 28. La partie 16 de la tige 14 traverse la cloison 3. On dispose autour de la tige 14, entre la cloison 3 et la rondelle 28 un ressort 29.

On fixe sur le support de la pince 2 un dispositif 30 de blocage des bras de la pince, par exemple des bras 4, 5. Ce dispositif n'a pas besoin d'exercer sur les bras de force importante, car comme expliqué ci-dessous, le serrage de la ferrite 1 est assuré par la tige filetée 14. Le dispositif 30 ne sert donc qu'à assurer le maintien de la position de référence lorsque la pince est serrée sur la pièce 1. Bien entendu, le dispositif 30 peut être commandé par tout dispositif moteur approprié, par exemple par électro-aimant, ou par tige filetée entraînée en rotation par un moteur.

On va maintenant expliquer à l'aide des figures 1 à 4 le fonctionnement de la pièce conforme à l'invention.

Sur les figures 1 à 4, la demi-ferrite 1 est représentée en position centrée. Sur la figure 1, la pince 2 est ouverte, et le ressort 29 est comprimé entre la cloison 3 et la rondelle 28 du fait que les écrous 18 et 23 sont le plus proches du milieu de la tige filetée 14 et donc le plus proches l'un de l'autre.

Sur la figure 2, le moteur 15 commence à entraîner en rotation la tige filetée 14 dans le sens indiqué, c'est-à-dire de façon à écarter l'un de l'autre les écrous 18 et 23. Le ressort 29 commence à se détendre en poussant les bras 4 et 5 vers la pièce 1.

Sur la figure 3, le moteur 15 continue de tourner dans le même sens et applique les surfaces 8 et 9 des bras 4 et 5 sur la surface 10 de la pièce 1. Grâce aux liaisons articulées entre les bielettes 24 et 25 et l'écrou 23 d'une part, et les bras 4 et 5 d'autre part, les déplacements des bras 4 et 5 sont indépendants l'un de l'autre. Il en résulte que si l'un de ces deux bras s'applique sur la pièce 1 avant l'autre, il n'y a aucun risque de détérioration ou de rupture de cette pièce par continuation du mouvement d'avancée de l'écrou 23 jusqu'à application des deux bras sur la pièce 1. Dès que les deux bras 4, 5 prennent appui (par leurs surfaces 8, 9) sur la pièce 1, la tige 14 commence à s'éloigner de la pièce 1 puisque l'écrou 23 ne peut plus avancer et que le moteur 15 continue de tourner.

Ce mouvement de recul de la tige 14, combiné avec le recul de l'écrou 18 rapproche de la pièce 1 les surfaces 11, 12 des bras 6, 7. Comme c'est le cas pour les bras 4, 5, les bras 6, 7 peuvent ne pas s'appliquer simultanément sur la pièce 1, grâce aux articulations entre les bielettes 19, 20, l'écrou 18, et les bras 6, 7. Dès que les deux surfaces 11, 12 sont en contact avec la surface 13 de la pièce 1, le moteur 15 s'arrête. L'arrêt du moteur 15 peut par exemple être commandé par des capteurs de pression disposés sur les surfaces 11, 12 ou par un limiteur de couple disposé entre le moteur 15 et la tige 14. La pince 2 est alors dans la position représentée en figure 4. Le dispositif 30 bloque les bras 4, 5.

On peut alors desserrer le dispositif de fixation de la pièce 1 sur son centreur, et déplacer la pince 2 serrée sur la pièce 1, l'élément de référence géométrique de la pince étant son support (symbolisé par la cloison 3) dont la position par rapport au dispositif centreur sur lequel est fixée la pièce 1 peut être déterminée avec une grande précision. Lorsque l'on déplace la pince 2, serrée sur la pièce 1, cette pièce 1 ne peut pas bouger par rapport au support de la pince car le dispositif 30 bloque les bras 4 et 5 par rapport au support de la pince, et la tige filetée 14 empêche le desserrage des bras 6, 7 par rapport aux bras 4, 5.

On notera que la force exercée par les bras 4, 5 sur la face 10 de la pièce 1 est sensiblement équilibrée par celle exercée sur l'autre face 13 de la pièce puisque les bras sont flottants par rapport au support (immobilisé) de la pince avant le blocage par le dispositif 30, et que ce blocage n'influence pas le serrage de la pièce 1 par les bras de la pince.

## Revendications

1. Procédé de préhension automatique d'objet permettant de conserver au moins un élément de référence géométrique qui lui est lié, pour saisir un objet (1) immobilisé sur un support approprié en position de référence, caractérisé par le fait qu'il consiste à saisir l'objet à l'aide d'au moins deux ensembles de préhension mobiles dans un boîtier (3) immobilisé par rapport au support de l'objet, en approchant l'un des ensembles (4, 5) d'une première face (10) de l'objet à l'aide d'un organe (14) de transmission de force motrice entraîné par un moyen moteur (15), l'organe de transmission étant flottant par rapport au support de l'objet à approcher d'au moins une autre face (13) de l'objet à l'aide dudit organe de transmission au moins un autre ensemble de préhension (6, 7), à arrêter l'entraînement de l'organe de transmission dès que les ensembles de préhension serrent suffisamment l'objet, à bloquer au moins l'un des ensembles par rapport au boîtier, à libérer l'objet de son support et à déplacer le boîtier avec l'objet.

2. Procédé selon la revendication 1, caractérisé par le fait que l'organe de transmission est sollicité vers l'objet par un ressort disposé dans ledit boîtier.

3. Procédé selon la revendication 1, caractérisé par le fait que l'un des ensembles de préhension est sollicité vers l'objet par un ressort disposé dans ledit boîtier.

4. Procédé selon l'une des revendications précédentes, caractérisé par le fait que les ensembles de préhension sont appliqués simultanément sur l'objet.

5. Procédé selon l'une des revendications 1 à 3, caractérisé par le fait que les ensembles de préhension sont appliqués les uns après les autres sur l'objet.

6. Pince (2) de préhension automatique d'objet (1), permettant de conserver au moins un élément de référence géométrique qui lui est lié, caractérisée par le fait qu'elle comporte, dans un boîtier (3) au moins deux ensembles (4, 5 et 6, 7) de bras de préhension comportant chacun au moins un bras mobile de préhension, un organe (14) de transmission de force motrice (15) relié à ces ensembles de bras, et au moins un ressort (29) disposé entre un point fixe (3) du boîtier et un point (28) mobile de la pince.

7. Pince selon la revendication 6, caractérisée par le fait que l'organe de transmission présente au moins un degré de liberté par rapport au boîtier.

8. Pince selon l'une des revendications 6 ou 7, caractérisée par le fait que ledit point mobile de la pince est situé sur l'un des ensembles de bras.

9. Pince selon l'une des revendications 6 ou 7, caractérisée par le fait que ledit point mobile est solidaire (29) de l'organe de transmission.

10. Pince selon l'une des revendications 6, 7 ou 9, caractérisée par le fait qu'elle comporte deux ensembles à deux bras rectilignes chacun (4, 5 et 6, 7) mobiles longitudinalement, les deux bras de chacun des deux ensembles étant reliés par des biellettes articulées (19, 20 et 24, 25) à un écrou (18, 23), les deux écrous étant entraînés en translation par une tige filetée (14), la tige filetée comportant deux parties, l'une avec un pas à gauche (16) et l'autre avec un pas à droite (17), chacune de ces deux parties coopérant avec l'un des deux écrous, le ressort étant appliqué contre une rondelle (28) solidaire de la tige filetée.

## Patentansprüche

1. Verfahren zum automatischen Greifen eines Gegenstandes, das es erlaubt, mindestens eine mit ihm verbundene geometrische Bezugsgröße zu erhalten, zum Ergreifen eines auf einem geeigneten Träger in der Bezugsstellung befestigten Gegenstandes (1), dadurch gekennzeichnet, daß es darin besteht, den Gegenstand mittels mindestens zweier, in einem relativ zum Träger des Gegenstandes unbeweglichen Gehäuse (3) beweglicher Greifanordnungen zu ergreifen, indem die eine dieser Anordnungen (4, 5) mit Hilfe eines durch ein Antriebsmittel (15) angetriebenes Antriebskraft übertragenden Organes (14) einer ersten Seite (10) des Gegenstandes genähert wird, wobei das Übertragungsorgan relativ zum Träger des Gegenstandes beweglich angeordnet ist, mit Hilfe des genannten Übertragungsorganes mindestens eine andere Seite (13) des Gegenstandes einer anderen Greifanordnung (6, 7) zu nähern, den Antrieb des Übertragungsorganes sofort anzuhalten, wenn die Greifanordnungen den Gegenstand ausreichend fest halten, mindestens eine der Anordnungen relativ zum Gehäuse festzusetzen, den Gegenstand von seinem Träger zu lösen und das Gehäuse mit dem Gegenstand zu bewegen.

2. Verfahren gemäß Patentanspruch 1, dadurch gekennzeichnet, daß das Übertragungsorgan durch eine im genannten Gehäuse angeordnete Feder zum Gegenstand gedrückt wird.

3. Verfahren gemäß Patentanspruch 1, dadurch gekennzeichnet, daß eine der Greifanordnungen durch eine im genannten Gehäuse angeordnete Feder zum Gegenstand gedrückt wird.

4. Verfahren gemäß irgendeinem der vorangehenden Patentansprüche, dadurch gekennzeichnet, daß die Greifanordnungen gleichzeitig am Gegenstand angesetzt werden.

5. Verfahren nach irgendeinem der Patentansprüche 1 bis 3, dadurch gekennzeichnet, daß die Greifanordnungen nacheinander am Gegenstand angesetzt werden.

6. Zange (2) zum automatischen Greifen eines Gegenstandes (1), die es erlaubt, mindestens eine mit ihm verbundene geometrische Bezugsgröße zu erhalten, dadurch gekennzeichnet, daß sie in einem Gehäuse (3) mindestens zwei Anordnungen (4, 5 und 6, 7) von Greifarmen, die jeweils mindestens einen beweglichen Greifarm aufweisen, enthält, ein mit diesen Anordnungen von Greifarmen verbundenes Organ (14) zur Übertragung der Antriebskraft (15) und mindestens eine zwischen einem festen Punkt (3) des Gehäuses und einem beweglichen Punkt (28) der Zange angeordnete Feder (29).

7. Zange gemäß Patentanspruch 6, dadurch gekennzeichnet, daß das Übertragungsorgan relativ zum Gehäuse mindestens einen Freiheitsgrad aufweist.

8. Zange gemäß irgendeinem der Patentansprüche 6 oder 7, dadurch gekennzeichnet, daß sich der genannte bewegliche Punkt der Zange an einer der Armanordnungen befindet.

9. Zange gemäß irgendeinem der Patentansprüche 6 oder 7, dadurch gekennzeichnet. daß der genannte bewegliche Punkt mit dem Übertragungsorgan fest (29) verbunden ist.

10. Zange gemäß irgendeinem der Patentansprüche 6, 7 oder 9, dadurch gekennzeichnet, daß sie zwei Anordnungen mit jeweils zwei geraden, in Längsrichtung beweglichen Armen (4, 5 und 6, 7) aufweist, wobei die beiden Arme jeder der beiden Anordnungen durch mit Gelenken verbundene Schwingarme (19, 20 und 24, 25) mit einer Mutter (18, 23) verbunden sind, die beiden Muttern durch eine Gewindestange (14) zur Verschiebung angetrieben werden, die Gewindestange zwei Teile aufweist, einen mit Linksgewinde (16) und den anderen mit Rechtsgewinde (17), wobei jeder dieser beiden Teile mit einer der beiden Muttern zusammenarbeitet, und wobei die Feder an eine mit der Gewindestange fest verbundene Scheibe (28) angesetzt ist.

## Claims

1. Method for automatically grasping an object enabling to keep at least one geometrical reference element bound to this object to grasp an object (1) immobilized on an appropriate support in a reference position, characterized in that it consists in grasping the object with the help of two grasping units which are mobile in a housing (3) immobilized relative to the support of the object, in drawing one of the units (4, 5) nearer to a first face (10) of the object with the help of a power transmission organ (14) driven by motoric means (15), the transmission organ being floating relative to the support of the object, in drawing nearer to at least one other face (13) of the object at least one other grasping unit (6, 7) with the help of said transmission organ, in stopping the drive of the transmission organ as soon as the grasping units clamp sufficiently the object, in locking at least one of the units relative to the housing, in releasing the object from its support and in moving the housing with the object.

2. Method according to claim 1, characterized in that the transmission organ is pushed towards the object by a spring placed in said housing.

3. Method according to claim 1, characterized in that one of the grasping units is pushed towards the object by a spring placed in said housing.

4. Method according to one of the preceding claims, characterized in that the grasping units are applied simultaneously onto the object.

5. Method according to one of the claims 1 to 3, characterized in that the grasping units are applied the one after the other onto the object.

6. Clamp (2) for automatically grasping an object (1) enabling to keep at least one geometrical reference element bound to it, characterized in that it includes in a housing (3) at least two sets (4, 5 and 6, 7) of grasping arms, each one including at least one mobile grasping arm, a power (15) transmission organ (14) connected to these sets of arms and at least one spring (29) placed between a fixed point (3) of the housing and a mobile point (28) of the clamp.

7. Clamp according to claim 6, characterized in that the transmission organ has at least one degree of freedom relative to the housing.

8. Clamp according to one of the claims 6 or 7, characterized in that said mobile point of the clamp is placed on one of the sets of arms.

9. Clamp according to one of the claims 6 or 7, characterized in that said mobile point is fixedly connected (29) to the transmission organ.

10. Clamp according to one of the claims 6, 7 or 9, characterized in that it includes two units with two rectilinear arms (4, 5 and 6, 7) each, which are mobile longitudinally, both arms of each set being connected by articulated connected by articulated connecting rods (19, 20 and 24, 25) to a nut (18, 23), both nuts being translated by a screw rod (14), the screw rod including two parts, one left-hand thread (16) and one right-hand thread (17), each of these parts cooperating with one of the nuts, the spring being applied against a washer (28) fixedly connected to the screw rod.

FIG. 1

FIG. 2

FIG. 3

FIG. 4